# FASCICULE DE BREVET EUROPEEN

(11) **EP 1 225 204 B1**
(45) Date de publication et mention de la délivrance du brevet: **20.07.2005**
(21) Numéro de dépôt: 02290077.3
(22) Date de dépôt: 11.01.2002
(51) Int. Cl.: C08L 95/00

(54) **Emulsion de bitume à pH tamponné**
Bitumenemulsion mit einem gepufferten pH-Wert
Bitumen emulsion with a buffered pH

(30) Priorité: 17.01.2001 FR 0100616
(43) Date de publication de la demande: 24.07.2002
(73) Titulaire: SCREG, 92100 Boulogne Billancourt (FR)
(72) Inventeur: Deneuvillers, Christine, 94100 Saint-Maur (FR)
(74) Mandataire: Bernasconi, Jean Raymond

(56) Documents cités:
- US-A- 1 691 767
- US-A- 4 007 127

## Description

La présente invention a trait à des émulsions aqueuses de bitume destinées à la préparation d'enrobés à froid hydrocarbonés

Les enrobés hydrocarbonés sont des matériaux résultant de l'enrobage d'un substrat de type granulat par un composé hydrocarboné, dit "liant", généralement à base de bitume.

Plus spécifiquement, les enrobés hydrocarbonés dits "à froid" sont préparés à une température modérée, généralement inférieure ou égale à 80°C. Ils s'opposent en cela aux enrobés dits "à chaud" pour lesquels la préparation est effectuée à une température beaucoup plus élevée, c'est à dire généralement de l'ordre de 150°C à 200°C.

L'intérêt des enrobés à froid réside dans le fait qu'ils ne nécessitent pas de chauffage des granulats lors de leur préparation, qu'ils peuvent être obtenus à partir de granulats humides, et que leurs procédés de préparation sont plus économiques et moins polluants que ceux des enrobés à chaud.

Les techniques d'enrobage à froid usuelles consistent généralement à mettre en contact une émulsion aqueuse d'un liant hydrocarboné, stabilisée par la présence d'agents tensioactifs dont une partie au moins est de type ionique, avec des matériaux minéraux, tels que des granulats d'origines géologiques diverses (quartzites, diorites, calcaires, matériaux alluvionnaires...).

Ces émulsions peuvent être des émulsions dites "cationiques" ou "anioniques", selon que les tensioactifs mis en oeuvre sont des tensioactifs majoritairement cationiques ou respectivement des tensioactifs majoritairement anioniques.

Ainsi, les émulsions cationiques sont des émulsions de pH faible, généralement inférieur à 5, comprenant des tensioactifs de type cationiques, par exemple des polyamines, des polyamidoamines ou des imidazolines, sous leurs formes ionisées, ou encore des sels d'ammoniums quaternaires.

Les émulsions anioniques sont quant à elles des émulsions de pH relativement élevé, généralement supérieur à 10, et comprenant des tensioactifs de type anionique, tels que des carboxylates, sous leur forme ionisée.

Dans ce type d'émulsion, de façon à ce que les tensioactifs ioniques mis en oeuvre soient effectivement présents sous leurs formes ionisée, on modifie généralement le pH de la phase aqueuse par mise en oeuvre d'un acide fort (émulsions cationiques) ou d'une base forte (émulsions anioniques) de façon à obtenir une phase aqueuse respectivement acide ou basique.

Lors de la préparation d'un enrobé à froid par mise en oeuvre d'une émulsion de bitume, l'ajout d'un matériau minéral de type granulat mène à une modification du pH de la phase aqueuse obtenue. En effet, le matériau peut contenir de l'eau, ce qui induit alors un effet de dilution de la phase aqueuse. Par ailleurs, la nature acide ou basique du matériau mis en oeuvre peut également induire une modification importante du pH de la phase aqueuse.

Ainsi, dans le cas de la mise en oeuvre d'une émulsion de type cationique, l'introduction d'un matériau minéral basique, de type granulats de diorite, induit par exemple une élévation importante du pH de la phase aqueuse, généralement d'une valeur comprise entre 1,5 et 4 à une valeur supérieure ou égale à 6. Dans le cas d'émulsions de type anionique, la mise en oeuvre d'un matériau de type acide, tel que des granulats de quartzite, mène quant à elle à une diminution du pH de la phase aqueuse d'une valeur généralement supérieure à 11 jusqu'à une valeur de 7, ou moins.

Dans tous les cas, la modification du pH réalisée provoque généralement une rupture de l'émulsion. En effet, les tensioactifs ioniques présents ont tendance à la fois à s'adsorber sur la surface du matériau minéral introduit et à perdre leur caractère ionique sous l'effet de la modification du pH, ce qui contribue à une diminution de la stabilité de l'émulsion, d'une part du fait de la diminution de la quantité d'agents tensioactifs présents aux interfaces eau/huile et d'autre part en raison de l'affaiblissement des répulsions électrostatiques entre les globules de l'émulsion.

Ces différents phénomènes conduisent à des processus d'homocoalescence interglobulaire et d'hétérocoalescence entre les globules et le matériau minéral introduit. Ces phénomènes d'hétérocoalescence et d'homocoalescence sont au moins en partie responsables de l'enrobage du matériau introduit et donc de la formation de l'enrobé hydrocarboné.

Néanmoins, de façon à réaliser un enrobage optimal des matériaux et à obtenir des propriétés mécaniques satisfaisantes pour les enrobés à froid préparés selon ce type de procédé, il est nécessaire que l'hétérocoalescence des globules de bitume s'effectue de la façon la plus homogène possible à la surface du matériau mis en oeuvre.

Or, dans la plupart des cas, les phénomènes d'homocoalescence interglobulaire liés à l'affaiblissement de la répulsion entre les globules de l'émulsion sont trop rapides pour que les phénomènes d'hétérocoalescence puissent s'effectuer de façon homogène.

De façon à surmonter ces difficultés et à obtenir des propriétés mécaniques satisfaisantes pour les enrobés à froid réalisés, une méthode consiste à augmenter la teneur en agent tensioactif au sein des émulsions de bitume utilisées, dans le but de maintenir une stabilité suffisante des globules de l'émulsion malgré les phénomènes d'adsorption et de neutralisation observés lors de l'introduction du matériau minéral.

Cependant, il est à noter que l'utilisation d'émulsions à haute teneur en tensioactif est relativement onéreuse. Par ailleurs, il faut également souligner que, si la mise en oeuvre d'émulsions à haute concentration en tensioactifs conduit effectivement à une diminution conséquente de l'homocoalescence, elle mène toutefois assez souvent à l'obtention d'enrobés à froid dit "boueux", à haute teneur en eau, qui présentent un aspect de coulis et sont de plus difficilement compactables du fait de leur important foisonnement, ce qui les rend généralement inutilisables dans l'industrie routière. En outre, la mise en oeuvre d'un excès de tensioactif peut également mener dans certains cas à un enrobage imparfait

Or, il a maintenant été découvert qu'un enrobage de qualité accrue pouvait être obtenu sans mettre en oeuvre un tel excès de tensioactif. En effet, les travaux des inventeurs ont permis de mettre en évidence que, de façon surprenante, l'utilisation d'émulsions de bitume présentant une phase aqueuse de pH tamponné dans le procédé de préparation d'un enrobé à froid mène, lors de l'introduction d'un matériau minéral, à un ralentissement suffisant des processus liés à la modification du pH pour que l'enrobage dudit matériau puisse s'effectuer de façon homogène sur toute la surface de toutes les fractions granulométriques du matériau. En d'autres termes, les inventeurs ont découvert que la mise en oeuvre d'une phase aqueuse de pH tamponné au sein de l'émulsion de bitume permet, lors de l'ajout du matériau minéral, d'assurer un effet tensioactif suffisant pour permettre un enrobage optimal sans induire par ailleurs les effets indésirables liés à l'utilisation d'un excès de tensioactif.

Sur la base de cette découverte, un des buts de la présente invention est de fournir des émulsions de bitume susceptibles, par mise en oeuvre dans un procédé d'enrobage à froid, de mener à un enrobage homogène et efficace d'un matériau minéral.

Un second but de l'invention est de fournir un procédé d'enrobage à froid capable de se substituer de façon avantageuse aux techniques d'enrobage mettant en oeuvre des émulsions de bitume présentant une haute teneur en agents tensioactifs.

Un autre but de la présente invention est de fournir des enrobés hydrocarbonés possédant des propriétés mécaniques adaptées à une mise en oeuvre dans le domaine de l'industrie routière.

Ainsi, selon un premier aspect, la présente invention a pour objet une émulsion aqueuse de bitume destinée à la réalisation d'enrobés à froid hydrocarbonés et comprenant :
(a) au moins un tensioactif de type ionique ; et
(b) une phase continue aqueuse de pH tamponné,
la valeur du pH de la phase continue (b) étant telle que le tensioactif ionique (a) est présent sous sa forme ionisée au sein de ladite émulsion.

Par "bitume" au sens de la présente invention, on entend tout liant hydrocarboné de type bitume, adapté à une mise en oeuvre dans l'industrie routière. Toutefois, les bitumes mis en oeuvre au sein de l'émulsion de l'invention sont généralement des bitumes caractérisés par une pénétration à l'aiguille comprise, à 25°C, entre 20 et 220 dixièmes de millimètres, de préférence entre 30 et 200 dixièmes de millimètres, et de façon particulièrement avantageuse entre 70 et 180 dixièmes de millimètres. Rappelons que la pénétration à l'aiguille d'un bitume est définie par la profondeur d'enfoncement d'une aiguille dans le bitume considéré, dans les conditions normalisées telles que définies selon la norme AFNOR EN 1426.

Les émulsions de bitume de l'invention présentent par ailleurs, dans le cas général, une teneur en liant hydrocarboné comprise entre 50 % et 80 % en masse, de préférence entre 60 % et 70 % en masse, ces pourcentages en masse étant exprimés par rapport à la masse totale de l'émulsion. L'eau présente au sein de l'émulsion représente quant à elle, en règle générale, de 20 % à 50 % et de préférence de 30 % à 40 % de la masse totale de l'émulsion.

Le liant hydrocarboné constituant la phase dispersée de l'émulsion peut comprendre, en plus du bitume tel que défini précédemment, des additifs divers tels que des fluidifiants ou des fluxants, des dopes d'adhésivité, ou encore des agents épaississants. Le cas échéant, le bitume constitue toutefois généralement au moins 40 % en masse et de préférence au moins 55 % en masse de la phase dispersée.

La nature exacte des agents tensioactifs présents au sein des émulsions de bitume de l'invention est fonction quant à elle à la fois du liant hydrocarboné mis en oeuvre et de l'utilisation envisagée pour ladite émulsion. De ce fait, la nature exacte des tensioactifs utilisés peut varier en une assez large mesure.

Toutefois, une des caractéristiques majeures des émulsions de l'invention est qu'elle contiennent spécifiquement au moins un tensioactif de type ionique sous sa forme ionisée.

Ainsi, selon une première variante, les émulsions de l'invention peuvent être des émulsions de type cationique. Dans ce cas, le pH de la phase continue de l'émulsion est généralement fixé à une valeur inférieure à 5,5, de préférence inférieur à 4, et avantageusement compris entre 2,5 et 3,5. Les tensioactifs présents au sein de ces émulsions comprennent alors au moins un tensioactif cationique sous sa forme ionisée, choisi généralement parmi les sels d'amines, de polyamines, de polyamidoamines, ou d'imidazolines, et de préférence, dans ce cas, parmi les sels de polyamines de suif, comprenant avantageusement des chaînes carbonées linéaires ou ramifiées possédant entre 8 et 22, et de préférence entre 12 et 18, atomes de carbone. La teneur en agents tensioactifs au sein des émulsions de l'invention est alors généralement comprise entre 2 et 8 kg de tensioactif par tonne d'émulsion (soit entre 0,2 et 0,8 % en masse), et de préférence entre 3 et 5 kg par tonne d'émulsion (soit entre 0,3 et 0,5 % en masse), ce qui correspond à des teneurs en tensioactifs relativement réduites dans le cadre de la préparation d'émulsions de bitume.

Selon une seconde variante, les émulsions de bitume de l'invention peuvent également être des émulsions de type anionique. Dans cette seconde variante, le pH de la phase aqueuse est généralement fixé à une valeur supérieure à 10, de préférence supérieure à 11 et avantageusement compris entre 11 et 13. Les tensioactifs mis en oeuvre dans ces émulsions comprennent alors au moins un tensioactif anionique sous sa forme ionisée. De préférence, ce tensioactif anionique est un sel de carboxylate, comprenant généralement, le cas échéant, un nombre d'atomes de carbone compris entre 10 et 20 au niveau de sa chaîne carbonée. La teneur en agents tensioactifs de type anionique au sein des émulsions de l'invention est alors généralement comprise entre 5 et 14 kg de tensioactif par tonne d'émulsion (soit entre 0,5 et 1,4 % en masse) et de préférence entre 6 et 12 kg par tonne (soit entre 0,6 et 1,2 % en masse), ce qui, là encore, correspond à des teneurs relativement peu élevées dans le domaine des émulsions de bitume.

Quelle que soit la nature de l'émulsion mise en oeuvre, le tensioactif de type ionique peut également être un tensioactif de type ampholyte ou amphotère, susceptible de s'ioniser en fonction du pH du milieu pour former, soit un tensioactif de type cationique (à un pH inférieur au point isoélectrique) soit un tensioactif de type anionique (à un pH supérieur au point isoélectrique).

Par ailleurs, l'agent tensioactif ionique (a) présent au sein des émulsions de l'invention peut également être mis en oeuvre avec d'autres agents tensioactifs ioniques, ou encore avec des agents tensioactifs non ioniques. Le cas échéant, les tensioactifs non ioniques mis en oeuvre sont avantageusement des monoalkyléthers polyoxyethylénés comprenant de préférence, le cas échéant, de 12 à 18 atomes de carbone au niveau de leur chaîne alkyle et de 2 à 15 groupements éthoxyles -CH₂CH₂O- au niveau de leur partie polyoxyéthylénée. De façon générale, dans le cadre de l'utilisation particulière d'agents tensioactifs non ioniques, la teneur totale en tensioactifs ioniques et non ioniques est généralement comprise entre 0,3 % et 3 % en masse au sein de l'émulsion.

Dans le cas des émulsions cationiques comme dans le cas des émulsions anioniques, le pH de la phase aqueuse continue des émulsions de l'invention est spécifiquement un pH tamponné. Par milieu de pH tamponné, on entend un milieu dont le pH varie peu, voire pas, lors d'une dilution modérée ou de l'ajout d'une quantité relativement faible d'un réactif de nature acide ou basique dans ledit milieu. La présence spécifique de ce milieu aqueux de pH tamponné permet, lors de la mise en contact de l'émulsion avec un matériau de type granulat de ralentir les phénomènes liés à la modification du pH.

De façon générale, la phase aqueuse de pH tamponné des émulsions de l'invention comprend avantageusement un mélange d'un acide faible et d'une base faible, un mélange d'un acide faible et d'une base forte et/ou un mélange d'une base faible et d'un acide fort.

La nature exacte des acides et des bases présentes au sein de cette phase aqueuse tamponnée est cependant à adapter, notamment en fonction de la nature des tensioactifs mis en oeuvre et de l'utilisation spécifique envisagée pour l'émulsion.

Ainsi, dans le cas d'une émulsion de type cationique selon l'invention, la phase aqueuse mise en oeuvre comprend généralement un acide faible correspondant à un couple acido-basique dont le pKa est avantageusement inférieur à 6 et de préférence inférieur à 5, généralement en association avec sa base conjuguée et/ou avec un acide fort tel que l'acide chlorydrique ou l'acide sulfurique par exemple. Avantageusement, et tout particulièrement lorsque le tensioactif mis en oeuvre est de type sel d'amine ou de polyamine, l'acide faible mis en oeuvre dans la phase aqueuse de pH tamponné est alors choisi parmi l'acide acétique, l'acide acrylique, l'acide benzoïque, l'acide formique, l'acide glycolique, ou encore l'acide téréphtalique.

De la même façon, dans le cas d'une émulsion de type anionique selon l'invention, la phase aqueuse de pH tamponné comprend généralement une base faible correspondant à un couple acido-basique dont le pKa est supérieur à 10 et de préférence supérieur à 11, de préférence en association avec son acide conjugué et/ou avec une base forte de type soude ou potasse, par exemple. De préférence, et en particulier lorsque le tensioactif anionique mis en oeuvre est de type sel de carboxylate, la base faible mise en oeuvre au sein de la phase aqueuse de l'émulsion est alors choisie parmi la benzylamine, la diéthylamine ou la triéthylamine.

De façon générale, le pH tamponné de la phase aqueuse peut également être fixé par mise en oeuvre de tout type de solutions tampons usuelles telles que par exemple les tampons acide chlorhydrique/glycine, acide citrique/soude, ou encore acide citrique/phosphate de sodium, dans la mesure où la mise en oeuvre d'un tel tampon mène à l'obtention d'une valeur du pH telle que le tensioactif ionique présent est effectivement sous sa forme ionisée au sein de l'émulsion réalisée.

Les différentes concentrations des acides et des bases présents au sein de la phase aqueuse des émulsions de l'invention peuvent varier quant à elles en une assez large mesure, tant que leurs proportions respectives conduisent à l'obtention d'un pH auquel les tensioactifs ioniques présents sont effectivement sous leur forme ionisée.

Toutefois, il est à souligner que, plus ces concentrations sont importantes, et plus la stabilisation du pH par effet tampon est conséquente lors de la mise en contact de ces émulsions avec un matériau minéral de type granulat. Les différentes concentrations d'acides et de bases mises en oeuvre doivent donc être suffisamment importantes pour assurer une stabilisation adéquate lors de l'enrobage. Néanmoins, il est à noter par ailleurs que la mise en oeuvre d'émulsions à haute teneur en acides et/ou bases peut également se traduire en termes de coûts élevés.

Compte tenu de ces différents éléments, il est des compétences de l'homme du métier d'adapter les concentrations à mettre en oeuvre au sein d'une émulsion particulière, en fonction du type de matériau qu'il souhaite enrober par mise en oeuvre de cette émulsion, en établissant un compromis acceptable entre la stabilisation réalisée en présence dudit matériau et le coût lié à la mise en oeuvre de la quantité de tampon employé.

Ainsi, dans le cadre d'une émulsion cationique selon l'invention destinée à l'enrobage d'un matériau à tendance fortement basique tel qu'un matériau calcaire, les concentrations mises en oeuvre devront par exemple être supérieures à celles utilisées dans le cadre de l'enrobage d'un matériau moins basique tel qu'un silicocalcaire alluvionnaire.

De la même façon, la stabilisation par effet tampon d'une émulsion anionique selon l'invention devra être d'autant plus importante que le matériau qu'elle est destinée à enrober présentera un caractère acide prononcé.

Les émulsions de bitume de l'invention peuvent être préparées selon tout moyen usuel de préparation d'émulsion de bitume connue de l'état de la technique. La seule différence existant par rapport aux procédés de préparation usuels est que la phase aqueuse mise en oeuvre est de façon spécifique une phase aqueuse de pH tamponné.

Selon un second aspect, la présente invention a également pour objet l'utilisation des émulsions décrites précédemment pour la préparation d'un enrobé hydrocarboné à froid.

En règle générale, les émulsions de bitume de l'invention se substituent avantageusement aux émulsions de bitume usuelles dans les procédés d'enrobage à froid connus de l'état de la technique. En effet, les émulsions de bitume de l'invention peuvent être utilisées dans ces procédés dans les mêmes conditions de mise en oeuvre que les émulsions de pH non stabilisé, tout en assurant par ailleurs un enrobage de qualité accrue du fait de la stabilisation du pH assurée par effet tampon lors de la mise en contact avec un matériau minéral de type granulat.

Néanmoins, les émulsions de bitume de l'invention sont avantageusement mises en oeuvre dans des procédés nécessitant une stabilisation effective du pH par effet tampon.

De ce fait, les procédés mettant en oeuvre les émulsions de l'invention comprennent généralement une étape consistant à mettre en contact une émulsion de type cationique telle que définie précédemment avec un matériau minéral à caractère basique ou une étape consistant à mettre en contact une émulsion de type anionique telle que définie précédemment avec un matériau minéral à caractère acide.

Selon un dernier aspect, la présente invention a également pour objet les enrobés hydrocarbonés à froid obtenus par mise en oeuvre d'une émulsion de bitume à phase aqueuse de pH tamponné selon l'invention.

Du fait de la stabilisation du pH assurée par effet du tampon au sein de la phase aqueuse des émulsions de l'invention, les enrobés à froid hydrocarbonés obtenus par mise en oeuvre des ces émulsions de pH stabilisé présentent généralement un taux d'enrobage important, généralement supérieur à 90 %, voire à 95 %. Dans certaines conditions, la mise en oeuvre d'une phase aqueuse de pH tamponné au sein de l'émulsion de bitume permet même de mener à des taux d'enrobage de 100 %. Ces différents taux d'enrobage sont exprimés, pour les enrobés obtenus, par le rapport des surfaces du matériau enrobé effectivement recouvertes par le liant hydrocarboné sur la surface totale du matériau.

Par ailleurs, notamment dans la mesure où les émulsions de l'invention ne présentent pas une teneur trop importante en agents tensioactifs, les enrobés à froid obtenus par mise en oeuvre de ces émulsions sont généralement facilement compactables et ils présentent, de façon générale, des performances mécaniques intéressantes, notamment en terme de résistance à la compression. En particulier, il est à noter que les enrobés à froid obtenus par mise en oeuvre des émulsions de bitume de l'invention présentent généralement des propriétés mécaniques au moins égales, voire supérieures à ceux obtenus par les procédés mettant en oeuvre des émulsions de bitume à haute teneur en tensioactif.

Les caractéristiques et avantages des émulsions de bitume de la présente invention et des enrobés à froid hydrocarbonés obtenus par mise en oeuvre de ces émulsions apparaîtront encore plus nettement au vu des exemples particuliers de mise en oeuvre exposés ci-après.

### Exemple 1 : émulsions cationiques

Différentes émulsions de bitume de type cationique ont été réalisées selon un procédé consistant à disperser un liant hydrocarboné constitué de bitume de distillation directe de classe 160/200 (c'est-à-dire caractérisé par une pénétration à l'aiguille à 25°C comprise entre 160 et 200 dixièmes de millimètres) dans une phase dispersante aqueuse, par émulsification dans une turbine de type Atomix dans les conditions suivantes :

| | |
|---|---|
| température initiale du bitume | 130 - 140°C |
| température initiale de la phase aqueuse | 50 - 60 °C |

Les compositions de ces différentes émulsions de bitume 1a, 1b, 1c et 1d sont répertoriées dans le tableau I ci-dessous, où les pourcentages indiqués correspondent à des pourcentages en masse exprimés par rapport à la masse totale de l'émulsion.

**Tableau I :**

| ***émulsions cationiques*** | | | | |
|---|---|---|---|---|
| Emulsion | 1a | 1b | 1c | 1d |
| Liant hydrocarboné (bitume de classe 160-200) | 60 % | 60 % | 60 % | 60 % |
| Tensioactif : polyamine de suif (POLYRAMS - CECA) | 0,8 % | 0,4 % | 0,4 % | 0,6 % |
| Solution aqueuse d'HCI à 32 % | 0,8 % | 0,4 % | - | - |
| Solution aqueuse d'acide acétique à 90 % | - | - | 1,3 % | 1,3 % |
| Hydroxyde de sodium | - | - | 0,4 % | 0,4 % |
| eau | qsp 100 % | qsp 100% | qsp 100 % | qsp 100 % |
| pH initial de la phase aqueuse | 2,2 | 2,4 | 4,9 | 5,0 |
| pH de l'émulsion | 2,5 | 3,8 | 4,9 | 5,0 |
| Diamètre moyen des globules de bitume (déterminé par granulométrie LASER COULTER LS 130) | 5,1 µm | 5,2 µm | 3,1 µm | 3,0 µm |

Les émulsions 1a, 1b, 1c et 1d ont été mises en oeuvre dans un procédé d'enrobage à froid avec différents matériaux minéraux par malaxage pendant une minute à 20 °C dans un malaxeur de type "Angers" d'un mélange ayant la composition suivante :
- matériau : 100 parties au poids
- émulsion : 7 parties en poids (dont 4,2 parties de liant hydrocarbonné)
- eau d'addition : quantité telle que la teneur totale en eau dans le mélange est de 5 parties en poids.

Les différents taux d'enrobage obtenus en fonction de l'émulsion et du matériau minéral mis en oeuvre sont indiqués dans le tableau II ci-dessous.

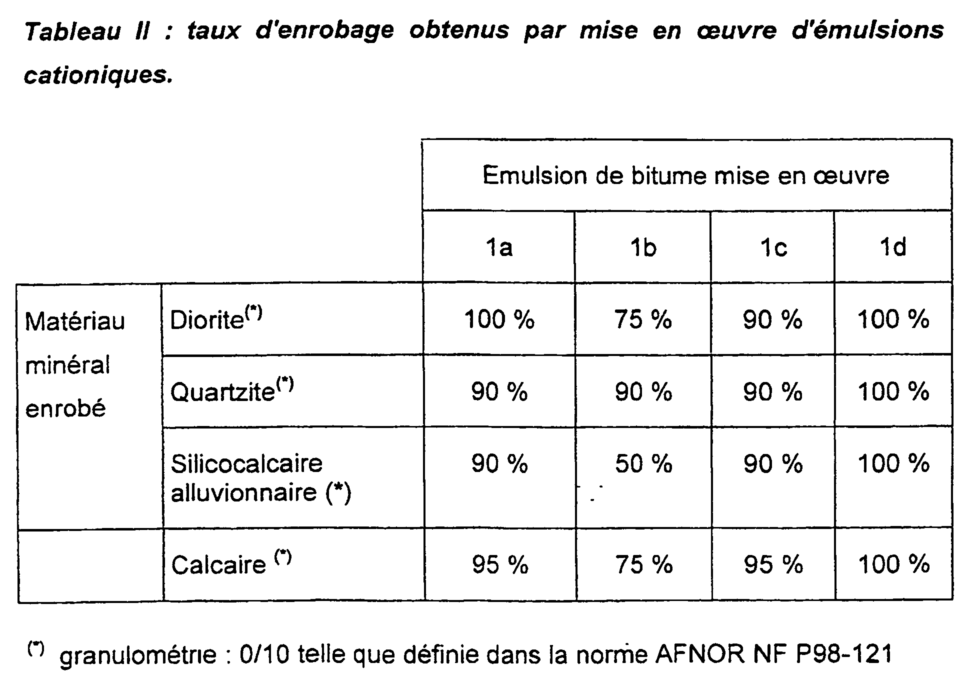

Les résultats obtenus montrent effectivement que la mise en oeuvre d'émulsions de bitume de pH stabilisé par effet tampon (émulsions 1c ou 1d) mène à des taux d'enrobages équivalents, voire supérieurs, à ceux obtenus par mise en oeuvre d'une émulsion à teneur en tensioactif plus élevée mais de pH non stabilisé du type de l'émulsion 1a.

Par ailleurs, il est également à noter que l'émulsion 1d de pH stabilisé par le tampon acétique permet de réaliser un enrobage de la quartzite et de l'alluvionnaire 2 à 100 %, alors qu'un tel taux d'enrobage n'est pas obtenu sans stabilisation du pH, même dans le cas de la mise en oeuvre d'une forte concentration en tensioactif telle que l'émulsion 1a.

### Exemple 2 : Emulsions anioniques

On a réalisé, de la même façon que dans l'exemple précédent des émulsions de bitume de type anionique selon un procédé consistant à disperser un liant hydrocarboné constitué de bitume de distillation directe de classe 160/200, dans une phase dispersante aqueuse, par émulsification dans une turbine de type Atomix dans les conditions suivantes :
- température initiale du bitume : 130 - 140°C
- température initiale de la phase aqueuse : 50 - 60°C

Les compositions de ces émulsions de bitume, référencées 2a, 2b, 2c et 2d sont indiquées dans le tableau III ci-dessous (les teneurs indiquées représentent des pourcentages exposés en pourcentage en masse par rapport à la masse totale de l'émulsion).

**Tableau III :**

| ***Emulsions anioniques*** | | | | |
|---|---|---|---|---|
| Emulsion | 2a | 2b | 2c | 2d |
| Liant hydrocarboné (bitume de classe 160/200) | 60 % | 60 % | 60 % | 60 % |
| Tensioactif amphotère* | 0,8 % | 1,2 % | 0,8 % | 0,6 % |
| Solution aqueuse de soude à 5 moles/litre | 1,05 % | 1,15 % | - | - |
| Tampon basique** pH = 10 | - | - | - | 1,0% |
| Eau | qsp 100 % | qsp 100 % | qsp 100 % | qsp 100 % |
| pH de l'émulsion | 12,5 | 12,5 | 9 | 10 |

| | | | | |
|---|---|---|---|---|
| (*) : Tensioactif EN 1009 commercialisé par Akzo | | | | |
| (**) : Tampon NORMADOSE commercialisé par Prolabo | | | | |

Différents enrobés à froid ont alors été réalisés par mise en oeuvre de ces émulsions anioniques selon un procédé consistant à malaxer pendant une minute à 20°C dans un malaxeur de type Angers, un mélange ayant la composition suivante :
- matériau : 100 parties au poids
- émulsion : 7 parties en poids (dont 4,2 parties de liant)
- eau d'addidtion: quantité telle que la teneur totale en eau est de 5 parties en poids dans le mélange.

Les taux d'enrobage obtenus sont répertoriés dans le tableau IV ci-dessous.

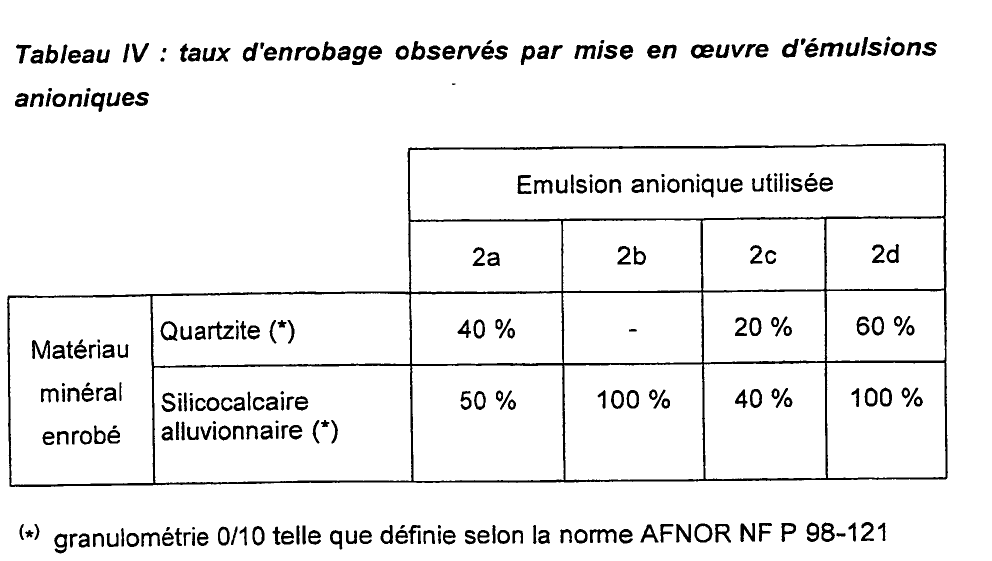

Les résultats obtenus montrent que, dans le cas des émulsions anioniques, une émulsion dont le pH de la phase aqueuse est stabilisé par effet tampon (2d) conduit à un enrobage efficace, sinon plus, que celui observé avec des émulsions présentant des teneurs plus importantes en agents tensioactifs (émulsions 2a, 2b et 2c).

### Exemple 3 : Propriétés mécaniques de résistance à la compression d'enrobés obtenus à partir d'émulsions de bitume de type cationique.

Les enrobés à froid obtenus à partir des émulsions 1a, 1b, 1c et 1d de l'exemple 1 ont été soumis au test de caractérisation Duriez de résistance à la compression avec et sans séjour en immersion, selon la norme NF P 98-251-4.

Brièvement, rappelons que ce test consiste à mesurer la résistance à la compression R d'un enrobé à froid issu de 14 jours de mûrissement à sec à 18°C et à 50 % d'humidité relative, et la résistance r à la compression du même enrobé à froid issu de 7 jours de mûrissement à sec à 18°C et à 50 % d'humidité relative et de 7 jours en immersion dans l'eau à 18°C. On considère généralement qu'un enrobé à froid présente des propriétés mécaniques satisfaisantes en terme de résistance à la compression si le rapport r/R est supérieur à 0,55 (norme NF P 98-121).

Les résultats obtenus avec les émulsions cationiques de l'exemple 1 sont indiqués dans le tableau V ci-dessous.

**Tableau V :**

| ***Résultats de résistance à la compression Duriez observés pour différents enrobés à froid obtenus par mise en oeuvre d'émulsions cationiques.*** | | | | |
|---|---|---|---|---|
| Emulsion cationique mise en oeuvre | 1a | 1b | 1c | 1d |
| Résistance R à la compression Duriez 14 jours à 18°C, 50 % HR (MPa) | 5,4 | 4,8 | 5,2 | 6,1 |
| Résistance r à la compression Duriez 7 jours à 18°C, 50% HR + 7 jours immersion 18°C (MPa) | 4,7 | 4,0 | 4,4 | 5,4 |
| r/R | 0,88 | 0,84 | 0,85 | 0,89 |

Les tests réalisés mettent bien en évidence que les propriétés mécaniques obtenues pour un enrobé à froid préparé à partir d'une émulsion cationique de pH stabilisé par effet tampon à l'obtention sont équivalentes, voire supérieures, à celles obtenues par mise en oeuvre d'émulsions cationiques à plus forte teneur en tensioactif.

## Revendications

1. Emulsion aqueuse de bitume destinée à la réalisation d'enrobés à froid hydrocarbonés et comprenant :
(a) au moins un tensioactif de type ionique ; et
(b) une phase continue aqueuse de pH tamponné,
la valeur du pH de la phase continue (b) étant telle que le tensioactif ionique (a) est présent sous sa forme ionisée au sein de ladite émulsion.

2. Emulsion selon la revendication 1, **caractérisée en ce que** le liant hydrocarboné présent au sein de ladite émulsion représente de 50 % à 80 % de la masse totale de l'émulsion et **en ce que** l'eau présente au sein de l'émulsion représente de 20 % à 50 % de la masse totale.

3. Emulsion selon la revendication 1 ou la revendication 2, **caractérisée en ce que** le tensioactif ionique (a) présent au sein de l'émulsion sous sa forme ionisée est un tensioactif de type cationique, et **en ce que** la valeur du pH tamponné de la phase aqueuse est inférieure à 5,5.

4. Emulsion selon la revendication 3, **caractérisée en ce que** le tensioactif de type cationique mis en oeuvre est un sel d'amine, de polyamine, de polyamidoamine ou d'imidazoline.

5. Emulsion selon la revendication 3 ou la revendication 4, **caractérisée en ce que** la teneur en tensioactif de type cationique est comprise entre 0,2 et 0,8 % en masse.

6. Emulsion selon l'une quelconque des revendications 3 à 5, **caractérisée en ce que** la phase aqueuse comprend un acide faible correspondant à un couple acido basique dont le pKa est inférieur à 6, en association avec sa base conjuguée et/ou avec un acide fort.

7. Emulsion selon la revendication 6, **caractérisée en ce que** ledit acide faible est choisi parmi l'acide acétique, l'acide acrylique, l'acide benzoique, l'acide formique, l'acide glycolique, ou l'acide téréphtalique.

8. Emulsion selon la revendication 1 ou la revendication 2, **caractérisée en ce que** le tensioactif ionique (a) présent au sein de l'émulsion sous sa forme ionisée est un tensioactif de type anionique, et **en ce que** la valeur du pH tamponné de la phase aqueuse est supérieure à 10.

9. Emulsion selon la revendication 8, **caractérisée en ce que** le tensioactif de type anionique mis en oeuvre est un sel de carboxylate.

10. Emulsion selon la revendication 8 ou la revendication 9, **caractérisée en ce que** la teneur en tensioactif de type anionique est comprise entre 0,5 et 1,4 % en masse.

11. Emulsion selon l'une quelconque des revendications 8 à 10, **caractérisée en ce que** la phase aqueuse comprend une base faible correspondant à un couple acido-basique dont le pKa est supérieur à 10, en association avec son acide conjugué et/ou avec une base forte.

12. Emulsion selon la revendication 11, **caractérisée en ce que** ladite base faible est choisie parmi la benzylamine, la diéthylamine, ou la triéthylamine.

13. Utilisation d'une émulsion selon l'une quelconque des revendications 1 à 12 pour la préparation d'un enrobé à froid hydrocarboné.

14. Procédé de préparation d'un enrobé à froid hydrocarboné comprenant une étape consistant à mettre en contact une émulsion cationique selon l'une quelconque des revendications 3 à 7 avec un matériau minéral à caractère basique.

15. Procédé de préparation d'un enrobé à froid hydrocarboné comprenant une étape consistant à mettre en contact une émulsion anionique selon l'une quelconque des revendications 8 à 12 avec un matériau minéral à caractère acide.

16. Enrobé à froid hydrocarboné obtenu par un procédé selon la revendication 14 ou la revendication 15 ou par mise en oeuvre d'une émulsion de bitume selon l'une quelconque des revendications 1 à 12 dans un procédé d'enrobage à froid consistant à mettre en contact ladite émulsion avec un matériau minéral de type granulat.

## Patentansprüche

1. Wässrige Bitumenemulsion für die Herstellung eines Kohlenwasserstoff-Kaltmischguts, umfassend:
a) mindestens ein ionisches Tensid und
b) eine kontinuierliche wässrige Phase mit gepuffertem pH,
wobei der Wert des pH der kontinuierlichen Phase (b) so gewählt ist, dass das ionische Tensid (a) in dieser Emulsion in seiner ionisierten Form vorliegt.

2. Emulsion nach Anspruch 1, **dadurch gekennzeichnet, dass** das in der Emulsion vorliegende Kohlenwasserstoff-Bindemittel 50 % bis 80 % der Gesamtmasse der Emulsion darstellt und dass das in der Emulsion vorliegende Wasser 20 % bis 50 % der Gesamtmasse darstellt.

3. Emulsion nach Anspruch 1 oder Anspruch 2, **dadurch gekennzeichnet, dass** das in der Emulsion in seiner ionisierten Form vorliegende ionische Tensid (a) ein kationisches Tensid ist und dass der Wert des gepufferten pH der wässrigen Phase niedriger als 5,5 ist.

4. Emulsion nach Anspruch 3, **dadurch gekennzeichnet, dass** das eingesetzte kationische Tensid ein Amin-, Polyamin-, Polyamidoamin- oder Imidazolinsalz ist.

5. Emulsion nach Anspruch 3 oder Anspruch 4, **dadurch gekennzeichnet, dass** der Gehalt an kationischem Tensid 0,2 bis 0,8 Massen-% beträgt.

6. Emulsion nach einem der Ansprüche 3 bis 5, **dadurch gekennzeichnet, dass** die wässrige Phase eine schwache Säure, die einem Säure-Basen-Paar entspricht, dessen pKa niedriger als 6 ist, in Kombination mit ihrer zugeordneten Base und/oder mit einer starken Säure enthält.

7. Emulsion nach Anspruch 6, **dadurch gekennzeichnet, dass** die schwache Säure aus Essigsäure, Acrylsäure, Benzoesäure, Ameisensäure, Glycolsäure oder Terephtalsäure ausgewählt ist.

8. Emulsion nach Anspruch 1 oder 2, **dadurch gekennzeichnet, dass** das in der Emulsion in seiner ionisierten Form vorliegende ionische Tensid (a) ein anionisches Tensid ist und dass der Wert des gepufferten pH der wässrigen Phase höher als 10 ist.

9. Emulsion nach Anspruch 8, **dadurch gekennzeichnet, dass** das eingesetzte anionische Tensid ein Carboxylatsalz ist.

10. Emulsion nach Anspruch 8 oder Anspruch 9, **dadurch gekennzeichnet, dass** der Gehalt an anionischem Tensid 0,5 bis 1,4 Massen-% beträgt.

11. Emulsion nach einem der Ansprüche 8 bis 10, **dadurch gekennzeichnet, dass** die wässrige Phase eine schwache Base, die einem Säure-Basen-Paar entspricht, dessen pKa höher als 10 ist, in Kombination mit ihrer zugeordneten Säure und/oder mit einer starken Base enthält.

12. Emulsion nach Anspruch 11, **dadurch gekennzeichnet, dass** die schwache Base aus Benzylamin, Diethylamin oder Triethylamin ausgewählt ist.

13. Verwendung einer Emulsion nach einem der Ansprüche 1 bis 12 für die Herstellung eines Kohlenwasserstoff-Kaltmischguts.

14. Verfahren zur Herstellung eines Kohlenwasserstoff-Kaltmischguts, das einen Schritt umfasst, der darin besteht, dass eine kationische Emulsion nach einem der Ansprüche 3 bis 7 mit einem Mineralstoff mit basischem Charakter in Kontakt gebracht wird.

15. Verfahren zur Herstellung eines Kohlenwasserstoff-Kaltmischguts, das einen Schritt umfasst, der darin besteht, dass eine anionische Emulsion nach einem der Ansprüche 8 bis 12 mit einem Mineralstoff mit saurem Charakter in Kontakt gebracht wird.

16. Kohlenwasserstoff-Kaltmischgut, erhalten durch ein Verfahren nach Anspruch 14 oder Anspruch 15 oder durch Verwendung einer Bitumenemulsion nach einem der Ansprüche 1 bis 12 in einem Kaltmischverfahren, das darin besteht, dass diese Emulsion mit einem Mineralstoff vom Typ Granulat in Kontakt gebracht wird.

## Claims

1. Aqueous emulsion of bitumen intended for the production of hydrocarbonated cold-mixed bituminous mixtures, comprising:
(a) at least one ionic surfactant; and
(b) a pH-buffered aqueous continuous phase,
the pH of the continuous phase (b) being such that the ionic surfactant (a) is present in ionised form within said emulsion.

2. Emulsion according to claim 1, **characterised in that** the hydrocarbon binder present within the emulsion represents from 50% to 80% of the total mass of the emulsion and **in that** the water present within the emulsion represents from 20% to 50% of the total mass.

3. Emulsion according to claim 1 or claim 2, **characterised in that** the ionic surfactant (a) present within the emulsion in its ionised form is a cationic surfactant and **in that** the buffered pH value of the aqueous phase is less than 5.5.

4. Emulsion according to claim 3, **characterised in that** the cationic surfactant used is an amine, polyamine, polyamidoamine or imidazoline salt.

5. Emulsion according to claim 3 or 4, **characterised in that** the content of cationic surfactant is between 0.2 and 0.8% by mass.

6. Emulsion according to any one of claims 3 to 5, **characterised in that** the aqueous phase comprises a weak acid corresponding to an acido-basic couple the pKa of which is less than 6, combined with its conjugated base and/or with a strong acid.

7. Emulsion according to claim 6, **characterised in that** the weak acid is selected from among acetic acid, acrylic acid, benzoic acid, formic acid, glycolic or terephthalic acid.

8. Emulsion according to claim 1 or 2, **characterised in that** the ionic surfactant (a) present in the emulsion in its ionised form is an anionic surfactant and **in that** the buffered pH value of the aqueous phase is greater than 10.

9. Emulsion according to claim 8, **characterised in that** the anionic surfactant used is a carboxylate salt.

10. Emulsion according to claim 8 or 9, **characterised in that** the content of anionic surfactant is between 0.5 and 1.4% by mass.

11. Emulsion according to any one of claims 8 to 10, **characterised in that** the aqueous phase comprises a weak base corresponding to an acido-basic couple the pKa of which is greater than 10, combined with the conjugated acid thereof and/or with a strong base.

12. Emulsion according to claim 11, **characterised** m that the weak base is selected from among benzylamine, diethylamine or triethylamine.

13. Use of an emulsion according to any one of claims 1 to 12 for preparing a hydrocarbonated cold-mixed bituminous mixture.

14. Process for preparing a hydrocarbonated cold-mixed bituminous mixture comprising a step which consists of contacting a cationic emulsion according to any one of claims 3 to 7 with a mineral material of a basic nature.

15. Process for preparing a hydrocarbonated cold-mixed bituminous mixture comprising a step consisting of contacting an anionic emulsion according to any one of claims 8 to 12 with a mineral material of an acidic nature.

16. Hydrocarbonated cold-mixed bituminous mixture obtained by a process according to claim 14 or 15 or by using a bitumen emulsion according to any one of claims 1 to 12 in a cold-mixing process comprising contacting said emulsion with a mineral material of the granulated type.
